(19) Europäisches Patentamt
European Patent Office
Office européen des brevets

(11) **EP 3 184 427 B1**

(12) **FASCICULE DE BREVET EUROPEEN**

(45) Date de publication et mention
de la délivrance du brevet:
**29.08.2018 Bulletin 2018/35**

(51) Int Cl.:
***B64C 27/467*** *(2006.01)*

(21) Numéro de dépôt: **16202349.3**

(22) Date de dépôt: **06.12.2016**

(54) **PALE DE ROTOR D'AERONEF A GEOMETRIE ADAPTEE POUR L'AMELIORATION ACOUSTIQUE LORS DE VOLS D'APPROCHE ET L'AMELIORATION DES PERFORMANCES EN VOLS STATIONNAIRE ET D'AVANCEMENT**

ROTORBLATT EINES LUFTFAHRZEUGS MIT ANGEPASSTER GEOMETRIE FÜR DIE AKUSTISCHE VERBESSERUNG IN DER ANFLUGPHASE UND VERBESSERUNG DER LEISTUNGEN IM SCHWEBE- UND VORWÄRTSFLUG

AN AIRCRAFT ROTOR BLADE OF SHAPE ADAPTED FOR ACOUSTIC IMPROVEMENT DURING APPROACH FLIGHTS AND FOR IMPROVING PERFORMANCE IN HOVERING FLIGHT AND IN FORWARD FLIGHT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2015 FR 1502660**

(43) Date de publication de la demande:
**28.06.2017 Bulletin 2017/26**

(73) Titulaire: **Airbus Helicopters**
**13725 Marignane Cedex (FR)**

(72) Inventeurs:
• **LEUSINK, Debbie**
**13290 AIX EN PROVENCE (FR)**
• **ALFANO, David**
**13090 Aix en Provence (FR)**
• **GARETON, Vincent**
**13280 ENSUES LA REDONNE (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A1- 0 565 413          US-A- 4 248 572**
**US-A- 6 116 857          US-A1- 2007 110 582**
**US-A1- 2012 251 326**

**Description**

La présente invention est du domaine des surfaces aérodynamiques portantes et plus particulièrement des surfaces aérodynamiques formant une voilure tournante.

La présente invention concerne une pale destinée à un rotor d'aéronef à voilure tournante ainsi qu'un rotor muni d'au moins deux telles pales. Cette pale est plus particulièrement destinée à un rotor principal de sustentation voire de propulsion d'un aéronef à voilure tournante.

Classiquement, une pale s'étend longitudinalement selon son envergure d'une première extrémité destinée à être fixée à un moyeu tournant d'un rotor vers une seconde extrémité dite extrémité libre. Par rapport au rotor, on comprend que la pale s'étend radialement de la première extrémité vers la deuxième extrémité selon une direction d'envergure. De plus, cette pale s'étend transversalement d'un bord d'attaque vers un bord de fuite de la pale, selon la corde de cette pale.

Cette pale est donc entraînée en rotation par un moyeu tournant de ce rotor. L'axe de rotation de ce moyeu correspond donc à l'axe de rotation de la pale.

La première extrémité est généralement désignée par l'expression « début de pale » alors que la seconde extrémité libre est désignée par l'expression « bout de pale ».

En fonctionnement, chaque pale d'un rotor est soumise à des forces aérodynamiques, notamment une force aérodynamique de portance durant le mouvement rotatif de ce rotor permettant de sustenter l'aéronef, voire de le propulser.

Dans ce but, la pale comporte une partie profilée située entre le début de pale et le bout de pale. Cette partie profilée est constituée par une succession de profils aérodynamiques, dénommés par la suite « profils » par commodité, selon la direction d'envergure. Chaque profil est situé dans un plan transversal généralement perpendiculaire à cette direction d'envergure et délimite une section de la pale et est agencé entre un début de la partie profilée et le bout de pale. Cette partie profilée assure l'essentiel de la portance de la pale.

La forme de la zone de transition entre le début de pale et le début de cette partie profilée est généralement imposée par des contraintes de fabrication et des contraintes structurelles de la pale. Cette zone de transition entre le début de pale et le début de cette partie profilée peut être désignée par l'expression « pied de pale » et a des performances aérodynamiques notablement réduites par rapport à celles de la partie profilée. Ce début de la partie profilée est de fait situé entre le début de pale et le bout de pale, à proximité du pied de pale. Cette zone de transition peut toutefois générer une force de portance. En outre, cette zone de transition, située à proximité du moyeu du rotor, a toutefois, quelle que soit sa forme aérodynamique, une faible contribution sur la portance totale de la pale.

Par exemple, les profils des sections de la pale sur la partie profilée sont caractérisés par un bord de fuite mince, idéalement nulle, alors que le bord de fuite au niveau du début de pale et de la zone de transition entre le début de pale et le début de cette partie profilée est épais, voire arrondi.

Un aéronef à voilure tournante présente l'avantage de pouvoir évoluer aussi bien avec des vitesses d'avancement élevées lors de vols de croisière qu'avec de très faibles vitesses d'avancement et de réaliser également des vols stationnaires. Un aéronef à voilure tournante présente ainsi l'avantage de pouvoir atterrir sur des zones de surfaces réduites et donc au plus près des zones habitées par exemple ou encore sur des plateformes d'appontage.

Toutefois, les vols d'avancement à des vitesses élevées exigent des caractéristiques aérodynamiques des pales qui peuvent être différentes voire défavorables pour les vols à très faibles vitesses d'avancement et les vols stationnaires.

De même, les caractéristiques aérodynamiques des pales influent également sur le bruit généré par les pales. Ce bruit peut être problématique lors des phases d'approche et d'atterrissage en raison de la proximité de zones habitées. En outre, des normes de certification acoustique contraignantes imposent des niveaux sonores que doivent respecter les aéronefs à voilures tournantes.

Pour une sélection prédéterminée de profils aérodynamiques, les caractéristiques géométriques d'une pale influençant les performances aérodynamiques de la pale lors des vols d'avancement à des vitesses élevées et des vols stationnaires ainsi que la signature acoustique de la pale sont notamment la corde des profils aérodynamiques des sections de la pale, la flèche et le vrillage de la pale.

On rappelle que la corde est la distance entre le bord d'attaque et le bord de fuite des profils des sections de la pale. Cette corde peut varier le long de l'envergure de la pale. On parle d'« effilement » pour désigner généralement une diminution des cordes le long de l'envergure de la pale, mais ce terme peut également désigner une augmentation de ces cordes le long de l'envergure de la pale.

La flèche peut être définie comme l'angle formé par le bord d'attaque de la pale avec un axe particulier de cette pale. Par convention, dans une zone en flèche avant, le bord d'attaque forme avec ledit axe de la pale un angle de flèche positif selon le sens de rotation du rotor alors que dans une zone en flèche arrière ce bord d'attaque forme un angle de flèche négatif avec ledit axe de la pale. Ledit axe de la pale est généralement confondu avec l'axe de pas de la pale.

Le vrillage d'une pale consiste à faire varier le calage des profils des sections de la pale le long de l'envergure de la pale. On entend par « calage » l'angle formé entre la corde de chaque profil des sections de la pale avec un plan de référence de cette pale, cet angle étant désigné par « angle de vrillage ». Ce plan de référence est par exemple le plan perpendiculaire à l'axe de rotation de la pale et comportant ledit axe de la pale.

On appelle « loi de vrillage » l'évolution des angles de vrillage selon l'envergure de la pale. De manière conventionnelle, le vrillage est mesuré négativement lorsque le bord d'attaque d'un profil d'une section de la pale est abaissé par rapport audit plan de référence.

On connait des solutions efficaces pour améliorer indépendamment les performances d'une pale pour des vols d'avancement à vitesses élevées et celles d'une pale pour des vols stationnaires ainsi que les performances acoustiques de la pale lors des phases d'approche.

Par exemple, l'amélioration des performances aérodynamiques d'une pale en vol stationnaire se caractérise par la réduction de la puissance consommée par cette pale à iso-portance du rotor. Cette amélioration peut être obtenue par des modifications géométriques passives de la pale, et en particulier en augmentant son vrillage.

Une augmentation adéquate du vrillage de la pale permet de répartir la portance de façon plus uniforme sur toute la surface de la pale et, par suite du rotor, et de réduire ainsi la puissance absorbée par chaque pale du rotor en vol stationnaire. On rappelle que l'augmentation du vrillage consiste en fait à abaisser le bord d'attaque par rapport audit plan de référence et cela d'autant plus vers le bout de pale que vers le début de pale en raison de l'évolution de la vitesse circonférentielle de l'écoulement de l'air en fonction de l'envergure. Les performances aérodynamiques de la pale en vol stationnaire sont notamment augmentées en homogénéisant ainsi les vitesses induites le long de l'envergure de la pale.

Cependant, un fort vrillage de la pale peut amener le bout de pale à porter négativement, c'est-à-dire à générer une déportance qui est en fait une force de portance orientée selon la direction de la pesanteur, pour une pale dans une position azimutale dite « pale avançante » par l'homme du métier lorsque l'aéronef à voilure tournante se déplace à grande vitesse. Les performances aérodynamiques de la pale sont alors dégradées en vol d'avancement. De plus, les niveaux de charges aérodynamiques subies par la pale ainsi que les vibrations sont également fortement augmentés en vol d'avancement.

L'ajout d'un dièdre en bout de pale permet également d'améliorer les performances aérodynamiques de la pale en vol stationnaire. Un dièdre est formé par une surface de pale en bout de pale qui est orientée vers le haut ou vers le bas. Ce dièdre permet de réduire l'influence du tourbillon marginal généré par une pale sur les pales suivantes du rotor en vol stationnaire. Néanmoins, ce dièdre peut s'accompagner d'une baisse des performances aérodynamiques de la pale en vol d'avancement ainsi que d'une augmentation des vibrations.

En outre, l'amélioration des performances aérodynamiques d'une pale en vol d'avancement se caractérise par la réduction de la puissance consommée par chaque pale du rotor pour une portance et une vitesse d'avancement données. Cette amélioration peut être obtenue par des modifications géométriques passives de la pale, et en particulier en modifiant sa corde le long de l'envergure de la pale et/ou en diminuant son vrillage.

Par exemple, la corde des profils des sections de la pale augmente depuis le début de pale le long de l'envergure, puis diminue avant atteindre le bout de pale. On parle alors de « double effilement » de la pale. Le document EP 0842846 décrit une pale à double effilement dont la corde maximum est située à une distance comprise entre 60% et 90% de l'envergure totale de la pale de l'axe de rotation de la pale.

Cependant, l'utilisation d'un double effilement sur une pale se traduit souvent par une augmentation du bruit en vol d'approche suite à l'augmentation de l'intensité tourbillonnaire émise, puis impactée par chaque pale. L'utilisation de ce double effilement se traduit également par des performances aérodynamiques en vol stationnaire dégradées par rapport à une pale de même vrillage et de même solidité aérodynamique, ce terme désignant le rapport entre la surface totale des pales du rotor vues de dessus et la surface du disque rotor qui est la surface décrite par une pale de ce rotor pendant une rotation de un tour.

Par ailleurs et conformément au propos précité, une diminution du vrillage de la pale induit une augmentation des incidences aérodynamiques en bout de pale côté pale avançante. Les incidences pour un bout de pale dévrillée sont donc plus proches de zéro côté pale avançante ce qui permet d'une part de réduire la déportance de ce bout de pale côté pale avançante et d'autre part de réduire la traînée locale en particulier celle liée à l'apparition d'ondes de choc.

Par contre, une diminution du vrillage de l'extrémité de la pale s'accompagne d'une réduction de la marge au décrochage de la pale côté pale reculante. De plus, cette diminution du vrillage de la pale n'est pas favorable au vol stationnaire comme évoqué précédemment.

Les documents US 7252479 et EP 0565413 décrivent une pale adaptée pour les vols d'avancement à hautes vitesses combinant un double effilement de la pale et une loi de vrillage.

Enfin, l'amélioration des performances acoustiques d'une pale en vol d'approche peut se caractériser par la réduction du bruit généré par l'interaction entre la pale et le tourbillon d'air généré par les pales précédentes du rotor. Cette amélioration peut être obtenue par des modifications géométriques passives de la pale, et en particulier en modifiant sa flèche le long de l'envergure.

Par exemple, comme décrit dans les documents EP 1557354, US 2012/0251326 et US 6116857, une pale avec une première zone en flèche avant et une seconde zone en flèche arrière évite que le bord d'attaque de la pale ne soit parallèle à la ligne des tourbillons émis par les pales précédentes sur ces première et seconde zones. Une telle pale permet ainsi de limiter les interactions entre cette pale et ces tourbillons en diminuant par exemple l'intensité du bruit impulsif liée à l'interaction entre la pale et ces tourbillons et, par suite, de limiter l'apparition de bruits.

En outre, cette pale à double flèche peut également comporter un effilement sur la seconde zone en flèche arrière qui permet également de réduite le niveau de bruit généré en vol. En effet, pour un profil donné, l'épaisseur de la pale est d'autant plus faible que la corde est courte, ce qui diminue l'apparition du bruit dit « d'épaisseur ». De même, la surface de la pale étant réduite suite à son effilement, la portance est aussi modifiée, ce qui peut diminuer l'apparition du bruit dit « de charge ».

Il est également possible d'intervenir sur la charge aérodynamique en bout de pale afin de modifier les tourbillons émis dans le sillage de la pale et, par suite, de réduire le niveau sonore de la pale. Dans ce but, on modifie les lois de variation du vrillage et des cordes des profils des sections de la pale. Cependant de telles variations sont incompatibles avec les optimisations précédemment évoquées dans le cadre de vols stationnaires ou d'avancement.

Par ailleurs, il est également possible, indépendamment de la géométrie de la pale, de modifier le régime de rotation de la pale ou bien d'adopter des trajectoires d'approche spécifiques de l'aéronef désignées « trajectoires d'approche à moindre bruit » afin de réduire le bruit rayonné au sol par les pales de l'aéronef.

Toutefois, une modification du régime de rotation de la pale rend le travail d'équilibrage dynamique de la pale plus complexe. De plus, une diminution du régime de rotation de la pale peut notamment générer une augmentation des décrochages aérodynamiques en extrémité de pale et, par suite, une augmentation des efforts de commande dynamique de la pale.

Il est également possible de combiner l'application d'une double flèche avec des variations des cordes des profils des sections de la pale et une loi de vrillage adaptées soit au vol stationnaire ou bien au vol d'avancement. Ainsi, les documents EP1557354 et US 2012/0251326 décrivent des pales adaptées pour le vol stationnaire tout en permettant de réduire le bruit généré au cours des vols d'approche. De même, on connaît le document EP0842846 qui décrit une pale adaptée pour le vol d'avancement à hautes vitesses et permet de limiter le bruit en vols d'approche.

Toutefois, les performances aérodynamiques de telles pales ne sont pas optimisées pour la phase de vol à laquelle les pales sont adaptées. En effet, la réduction de façon significative du bruit émis par la pale est dans tous les cas privilégiée et les performances aérodynamiques de la pale peuvent être dégradées dans certaines phases de vol. Cette dégradation est notamment due à un manque de raideur en torsion et/ou en flexion de la pale qui peut alors se déformer sous les efforts aérodynamiques et inertiels subis par la pale.

Par contre, l'optimisation des profils de la pale pour les vols d'avancement à hautes vitesses est différente et semble antagoniste avec l'optimisation de ces profils pour les vols stationnaires. Une optimisation des profils commune aux vols stationnaires et d'avancement à hautes vitesses est particulièrement complexe à définir, les conditions aérodynamiques rencontrées par la pale étant différentes. De plus, la position de la pale qui est, lors de la rotation du rotor, alternativement avançante et reculante vis-à-vis du flux d'air, augmente les différences entre ces conditions aérodynamiques rencontrées par la pale.

Enfin, le document intitulé « Multiobjective-Multipoint Rotor Blade Optimization in Forward Flight Conditions Using Surrogate-Assisted Memetic Algorithms », présenté à l'« European Rotorcraft Forum » à Gallarate (Italie) en septembre 2011 compare plusieurs méthodes d'optimisation d'une pale en vol d'avancement. Cette pale peut comporter uniquement une loi de vrillage, présenter une combinaison des lois de variation des cordes et de la flèche ou bien présenter une combinaison des lois de variation du vrillage, des cordes et de la flèche.

La présente invention a pour but de s'affranchir des limitations mentionnées ci-dessus et de proposer une pale selon la revendication 1 ou la revendication 2, améliorant les performances aérodynamiques de la pale aussi bien en vol d'avancement qu'en vol stationnaire et capable également de réduire le bruit émis par la pale lors d'un vol d'approche. L'invention concerne également un rotor destiné à un aéronef à voilure tournante comportant au moins deux telles pales.

La présente invention a alors pour objet une pale pour un rotor d'aéronef à voilure tournante destinée à être en rotation autour d'un axe de rotation $A$, la pale s'étendant d'une part selon un axe de pale $B$ entre un début de pale apte à être relié à un moyeu du rotor et un bout de pale situé à une extrémité libre de la pale et d'autre part selon un axe transversal $T$ sensiblement perpendiculaire à l'axe de pale $B$ entre un bord d'attaque et un bord de fuite, la pale comportant une partie profilée située entre le début de pale et le bout de pale, la partie profilée étant constituée par une succession de profils aérodynamiques, chaque profil aérodynamique étant situé dans un plan transversal sensiblement perpendiculaire à l'axe de pale $B$, chaque profil délimitant une section de la pale, le bout de pale étant situé à une distance de référence égale à un rayon rotor $R$ de l'axe de rotation $A$, une distance maximale entre le bord d'attaque et le bord de fuite dans ce plan transversal constituant une corde $c$ pour le profil aérodynamique de la pale, une corde moyenne $\bar{c}$ étant une valeur moyenne de la corde $c$ sur la partie profilée, un premier sens vers l'avant étant défini du bord de fuite vers le bord d'attaque et un second sens vers l'arrière étant défini du bord d'attaque vers le bord de fuite.

La corde moyenne $\bar{c}$ est de préférence définie par une pondération en carré du rayon r de chaque profil des sections de la pale selon la formule

$$\bar{c} = \frac{\int_{R_0}^{R} L(r).r^2.dr}{\int_{R_0}^{R} r^2.dr},$$

*L(r)* étant la longueur de la corde locale d'un profil de la pale situé à un rayon r de l'axe de rotation *A, R₀* étant le rayon du début de la partie profilée et *R* le rayon du bout de pale.

Toutefois, la corde moyenne $\bar{c}$ peut être définie par une moyenne arithmétique des cordes *c* des sections de la pale sur l'ensemble de la partie profilée de la pale.

Cette pale selon l'invention est remarquable en ce qu'elle présente une combinaison des lois de variation des cordes et du vrillage, le vrillage étant formé par les variations angulaires entre les profils aérodynamiques des sections de la pale, la corde augmentant entre le début de la partie profilée et une première section *S1* située à une première distance de l'axe de rotation *A* comprise entre 0.6*R* et 0.9*R*, la corde diminuant au-delà de la première section *S1,* le vrillage des profils des sections de la pale décroissant entre une deuxième section *S2* située à une deuxième distance de l'axe de rotation *A* comprise entre 0.3*R* et 0.4*R* et le bout de pale, un premier gradient du vrillage étant compris entre - 25°/*R* et -4°/*R* entre la deuxième section *S2* et une troisième section *S3* située à une troisième distance de l'axe de rotation *A* comprise entre 0.4*R* et 0.6*R*, un deuxième gradient du vrillage étant compris entre -25°/*R* et -4°/*R* entre la troisième section *S3* et une quatrième section *S4* située à une quatrième distance de l'axe de rotation *A* comprise entre 0.65*R* et 0.85*R*, un troisième gradient du vrillage étant compris entre -16°/*R* et -4°/*R* entre la quatrième section *S4* et une cinquième section *S5* située à une cinquième distance de l'axe de rotation A comprise entre 0.85*R* et 0.95*R*, un quatrième gradient du vrillage étant compris entre -16°/*R* et 0°/*R* entre la cinquième section *S5* et le bout de pale.

Cette pale selon l'invention est destinée de préférence au rotor principal de sustentation voire de propulsion d'un aéronef à voilure tournante. L'axe de rotation *A* de la pale correspond à l'axe de rotation du moyeu du rotor.

La partie profilée de la pale assure l'essentiel de la portance de la pale lors de la rotation de la pale autour de l'axe *A*. Le début de cette partie profilée est notamment caractérisé par un bord de fuite mince, alors qu'entre le début de pale et le début de cette partie profilée, le bord de fuite est épais, voire arrondi. Le début de cette partie profilée est donc généralement distinct du début de pale et situé entre le début de pale et le bout de pale, à proximité du début de pale.

Le bout de pale est situé à une distance de référence égale au rayon rotor *R* de l'axe de rotation *A*, et ce rayon rotor *R* est utilisé pour localiser un profil ou bien une section de la pale selon l'axe de pale *B*. Par exemple, le début de pale est situé à une sixième distance comprise entre 0.05*R* et 0.3*R* de l'axe de rotation *A* et le début de la partie profilée de la pale est situé à une septième distance comprise entre 0.1*R* et 0.4*R* de l'axe de rotation *A*. La septième distance est supérieure ou égale à la sixième distance.

De même, on utilise la corde moyenne $\bar{c}$ de la pale sur la partie profilée pour définir la corde de chaque profil de la pale le long de son envergure.

Selon la loi de variation des cordes des profils des sections de la pale, cette corde varie autour de la corde moyenne $\bar{c}$ de +/-40% entre le début de la partie profilée et la première section *S1*. La corde varie donc de 0.6 $\bar{c}$ à 1.4$\bar{c}$ respectivement depuis le début de la partie profilée jusqu'à la première section *S1*. La variation des cordes peut également être plus faible entre le début de la partie profilée et la première section *S1*, afin notamment de moins pénaliser les performances aérodynamiques de la pale lors d'un vol stationnaire. La corde varie par exemple de +/-20% autour de la corde moyenne $\bar{c}$ entre le début de la partie profilée et la première section *S1*.

En outre, la corde des profils des sections de la pale est de préférence inférieure à la corde moyenne $\bar{c}$ sur une première partie de la pale, par exemple entre le début de la partie profilée de la pale et une sixième section *S6* située à une huitième distance de l'axe de rotation *A* comprise entre 0.5*R* et 0.8*R*. La corde des profils des sections de la pale est ensuite supérieure à cette corde moyenne $\bar{c}$ entre cette sixième section *S6* et une septième section *S7* située à une neuvième distance de l'axe de rotation *A* comprise entre 0.85*R* et 0.95*R*, puis inférieure à cette corde moyenne $\bar{c}$ au-delà de cette septième section *S7* et jusqu'au bout de pale. Par exemple, la corde du profil de la section de la pale au niveau du début de la partie profilée de la pale est comprise entre 0.4$\bar{c}$ et 0.9$\bar{c}$ alors que la corde du profil de la section de la pale en bout de pale peut être comprise entre 0.2$\bar{c}$ et 0.8$\bar{c}$.

Par ailleurs, la loi de variation du vrillage de la pale peut être linéaire par morceaux, c'est-à-dire entre deux sections adjacentes parmi les sections *S2,S3,S4,S5* et entre la cinquième section *S5* et le bout de pale, ou bien non linéaire sur l'ensemble de la partie profilée de la pale.

Dans le cas où la loi de vrillage est linéaire par morceaux, cette loi de vrillage est constituée par des segments de droites, un segment caractérisant la variation de vrillage entre deux sections adjacentes parmi les sections *S2,S3,S4,S5* et entre la cinquième section *S5* et le bout de pale. Le gradient de vrillage, qui est la dérivée locale du vrillage le long de l'envergure de la pale, correspond alors au coefficient directeur des droites supportant ces segments. Ce gradient de vrillage est alors formé par des droites horizontales discontinues, une droite étant située entre les sections adjacentes et entre la cinquième section *S5* et le bout de pale.

De plus, afin de permettre une variation du vrillage compatible aussi bien pour un vol stationnaire que pour un vol d'avancement et avec la loi de variation des cordes, le premier gradient du vrillage situé entre la deuxième section $S2$ et la troisième section $S3$ est de préférence inférieur au deuxième gradient du vrillage situé entre la troisième section $S3$ et la quatrième section $S4$, le deuxième gradient du vrillage est de préférence supérieur au troisième gradient du vrillage situé entre la quatrième section $S4$ et la cinquième section $S5$ et le troisième gradient du vrillage est de préférence inférieur au quatrième gradient du vrillage situé entre la cinquième section $S5$ et le bout de pale.

Dans le cas où cette loi de vrillage est non linéaire, sur la partie profilée, le gradient de vrillage est de préférence une courbe continue sur l'ensemble de la partie profilée de la pale. Le premier gradient du vrillage atteint alors un premier palier compris entre -25°/$R$ et -15°/$R$ au niveau de la troisième section $S3$, le deuxième gradient du vrillage atteint un deuxième palier compris entre -14°/$R$ et -4°/$R$ au niveau de la quatrième section $S4$, le troisième gradient du vrillage atteint un troisième palier compris entre -16°/$R$ et -6°/$R$ au niveau de la cinquième section $S5$ et le quatrième gradient du vrillage est compris entre -10°/$R$ et 0°/$R$ au niveau du bout de pale.

Cette loi de vrillage peut correspondre à une courbe polynomiale par exemple une courbe de Bézier d'ordre 6 ou supérieur.

De préférence, le premier palier est égal à -18°/$R$, le deuxième palier à -6°/$R$, le troisième palier à -13°/$R$ et le quatrième gradient du vrillage est égal à -8°/$R$ au niveau du bout de pale.

Quelle que soit la loi de variation du vrillage, la deuxième distance est par exemple égale à 0.35$R$, la troisième distance à 0.48$R$, la quatrième distance à 0.78$R$ et la cinquième distance à 0.92$R$.

La loi de vrillage définit uniquement la variation du vrillage de la pale entre le début de la partie profilée et le bout de pale, mais elle ne définit pas le calage des profils des sections de la pale. Le calage des profils des sections de la pale au niveau du début de la partie profilée n'a pas d'influence directe sur le comportement aérodynamique de la pale. En effet, le calage des profils des sections de la pale au niveau du début de la partie profilée et de l'ensemble des profils de la pale le long de la partie profilée dépend au cours du vol du réglage du pas collectif et de celui du pas cyclique de la pale. C'est donc bien la variation du vrillage qui caractérise le comportement aérodynamique de la pale, la valeur du calage des profils des sections de la pale étant pris en compte dans le réglage du pas collectif et de celui du pas cyclique de la pale.

En outre, les zones de la pale situées à proximité de cet axe de rotation $A$ et notamment la zone située entre l'axe de rotation $A$ et la deuxième section $S2$ sont peu sollicitées par les forces aérodynamiques lors de la rotation de la pale. Le vrillage à proximité de cet axe de rotation $A$ a donc moins d'influence sur le comportement aérodynamique de la pale. De la sorte, le vrillage peut être sensiblement constant ou bien varier faiblement entre le début de la partie profilée et la deuxième section $S2$ sans modifier significativement le comportement et les performances aérodynamiques de la pale. La variation du vrillage est par exemple inférieure ou égale à 2° entre le début de la partie profilée et la deuxième section $S2$.

La combinaison de ces lois de variation des cordes et du vrillage de la pale le long de son envergure permet avantageusement d'améliorer les performances aérodynamiques de la pale aussi bien lors de vols d'avancement que de vols stationnaires. En effet, le vrillage est important dans une première zone de la pale, par exemple entre 0.3$R$ et 0.7$R$, et permet ainsi de compenser la faible corde qui est essentiellement inférieure à la corde moyenne $\bar{c}$. De plus, le dévrillage dans une deuxième zone de la pale, par exemple entre 0.7$R$ et 0.9$R$, est favorable au vol d'avancement pour une pale avançante, mais génère une augmentation des efforts sur une pale reculante. Avantageusement, sur cette deuxième zone, la corde des profils des sections de la pale est essentiellement supérieure à la corde moyenne $\bar{c}$ et permet ainsi de supporter ces efforts augmentés sans dégrader le comportement aérodynamique de la pale reculante.

Par ailleurs, la corde peut diminuer de façon non linéaire au delà d'une huitième section $S8$ jusqu'au bout de pale, cette huitième section $S8$ étant située à une dixième distance de l'axe de rotation $A$ comprise entre 0.9$R$ et 0.95$R$. De préférence, la corde des profils des sections de la pale diminue selon une courbe sensiblement parabolique au delà de la huitième section $S8$. On parle alors généralement de « saumon parabolique » présent en bout de pale. D'autres formes non linéaires sont également possibles pour ce bout de pale selon des courbes polynomiales telles qu'une courbe de Bézier.

Dans ce cas, la corde du profil de la section en bout de pale est comprise entre 0.2$c_1$ et 0.8$c_1$, $c_1$ étant la valeur de la corde du profil de la section de la pale au niveau de la huitième section $S8$, c'est-à-dire au début de cette zone de diminution non linéaire de la corde des profils des sections de la pale. De préférence, la corde en bout de pale est égale à 0.3$c_1$.

Par contre, la combinaison de ces lois de variation des cordes et du vrillage des profils des sections de la pale peut engendrer une légère augmentation du bruit généré par la pale, notamment lors de vols d'approche. Avantageusement, une loi de variation de la flèche de la pale combinée aux lois de variation des cordes et du vrillage permet d'une part de compenser cette augmentation du bruit généré par la pale et d'autre part de réduire significativement le bruit généré par la pale lors de vols d'approche. Selon l'invention, les lois de variation des cordes et du vrillage sont alors combinées avec une loi de variation de la flèche. Selon cette loi de variation de la flèche, la flèche de la pale est tout d'abord dirigée vers l'avant de la pale entre le début de la partie profilée et une neuvième section $S9$ située à une onzième distance de l'axe de rotation $A$ comprise entre 0.5$R$ et 0.8$R$, le bord d'attaque formant un premier angle de flèche avant strictement supérieur à 0° et inférieur à 10° avec l'axe de pale *B.* Ensuite, la flèche est dirigée vers l'avant de la pale entre la neuvième section *S9* et une dixième section *S10* située à une douzième distance de l'axe de rotation *A* comprise entre 0.6*R* et 0.95*R*, le bord d'attaque formant un deuxième angle de flèche avant compris entre 1° et 15° avec l'axe de pale *B.* Enfin, la flèche est dirigée vers l'arrière de la pale entre la dixième section *S10* et le bout de pale, le bord d'attaque formant un troisième angle de flèche arrière compris entre -35° et -15° avec l'axe de pale B.

La loi de variation de la flèche définit ainsi une pale avec une triple flèche qui permet avantageusement d'améliorer la signature acoustique de la pale.

Cette triple flèche évite que le bord d'attaque de la pale ne soit parallèle aux tourbillons émis par les pales précédentes lors de la rotation d'une pale. Cette triple flèche permet ainsi une réduction de l'intensité de l'énergie acoustique générée par l'interaction entre la pale et les tourbillons d'air émis par les pales précédentes du rotor sur une partie de l'envergure de la pale, notamment lors d'un vol d'approche.

En outre, les extrémités des pales précédentes émettent des tourbillons formant des lignes de tourbillons de forme hélicoïdale. Il est alors intéressant de limiter les portions en envergure du bord d'attaque de la pale qui sont simultanément en interaction avec ces lignes de tourbillons afin de limiter l'effet du bruit généré sur l'oreille humaine.

En effet, avec un bord d'attaque de la pale avec un angle de flèche évolutif de façon continue sur une ou plusieurs des zones délimitées par les neuvième et dixième sections *S9,S10* ainsi que par le bout de pale, l'interaction entre ce bord d'attaque et les tourbillons émis par les pales précédant une pale suivante se produit simultanément sur plusieurs points de ce bord d'attaque et entraîne l'apparition d'une énergie acoustique. Il en résulte l'émission d'un son impulsif et gênant pour l'oreille humaine, ce phénomène étant pénalisant pour la certification acoustique.

Avantageusement, avec un bord d'attaque de la pale rectiligne et incliné vis-à-vis de l'axe de pale sur chaque zone délimitée par les neuvième et dixième sections *S9,S10* ainsi que par le bout de pale, l'interaction entre le bord d'attaque et ces tourbillons se produit simultanément sur un nombre réduits de points du bord d'attaque. Il en résulte la diminution de l'impulsivité du signal émis, qui est alors moins gênant pour l'oreille humaine.

En conséquence, le bord d'attaque de la pale est de préférence rectiligne et incliné sur chaque zone délimitée par les neuvième et dixième sections *S9,S10* ainsi que par le bout de pale afin de réduire l'énergie acoustique perçue par un observateur.

La flèche est donc formée de préférence par un premier angle de flèche avant, un deuxième angle de flèche avant et un troisième angle de flèche arrière qui sont constants respectivement entre le début de la partie profilée et la neuvième section *S9*, puis entre la neuvième section *S9* et la dixième section *S10* et enfin entre la dixième section *S10* et le bout de pale. Selon l'invention, le premier angle de flèche avant $\alpha_1$ est différent du deuxième angle de flèche avant $\alpha_2$ afin de garantir la présence de trois flèches distinctes sur la pale selon l'invention.

En outre, le premier angle de flèche avant $\alpha_1$ peut être strictement inférieur au deuxième angle de flèche avant $\alpha_2$ afin de garantir une progressivité sur les deux zones en flèche avant.

Par exemple, le premier angle de flèche avant est égal à 4°, le deuxième angle de flèche avant à 8° et le troisième angle de flèche arrière à -23°.

En outre, la pale peut comporter un dièdre commençant au niveau de la huitième section *S8* et se terminant au bout de pale. Ce dièdre est de préférence orienté vers le bas et permet d'améliorer les performances aérodynamiques de la pale en vol stationnaire.

La présente invention a aussi pour objet un rotor destiné à un aéronef à voilure tournante. Ce rotor comporte au moins deux pales telles que précédemment décrites. Ce rotor est plus particulièrement destiné à être un rotor principal de sustentation voire de propulsion d'un aéronef à voilure tournante.

L'invention et ses avantages apparaîtront avec plus de détails dans le cadre de la description qui suit avec des exemples de réalisation donnés à titre illustratif en référence aux figures annexées qui représentent :

- les figures 1 et 2, une pale selon l'invention,
- la figure 3, un aéronef muni d'un rotor formé par de telles pales,
- la figure 4, une courbe de variation des cordes des profils des sections de la pale,
- la figure 5, une courbe de variation de la flèche de la pale,
- la figure 6, une courbe de variation du vrillage de la pale, et
- la figure 7, une courbe de variation du gradient de vrillage de la pale.

Les éléments présents dans plusieurs figures distinctes sont affectés d'une seule et même référence.

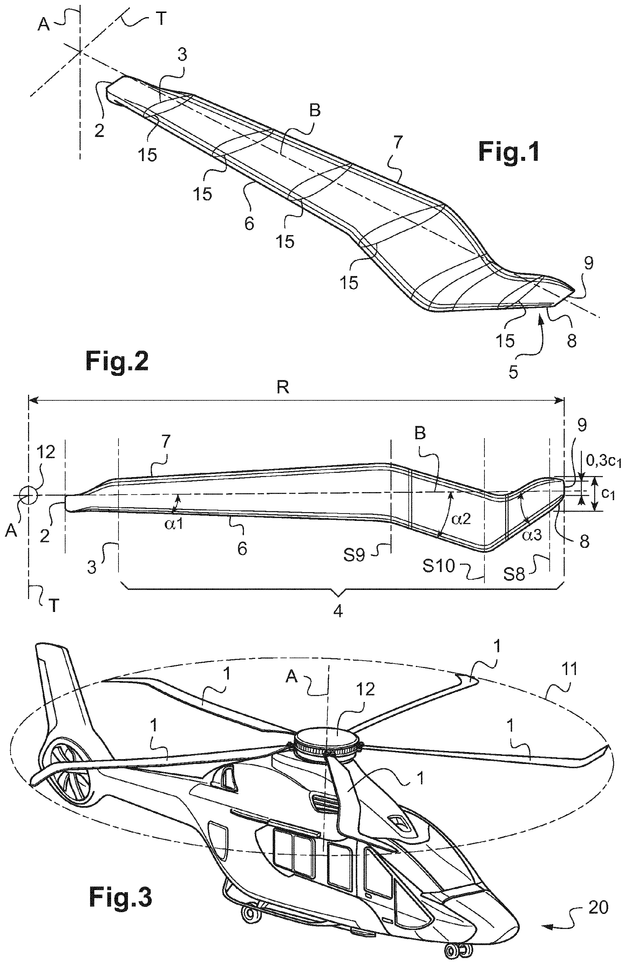

Les figures 1 et 2 représentent une pale 1 s'étendant d'une part en envergure selon un axe de pale *B* entre un début de pale 2 et un bout de pale 9 et d'autre part selon un axe transversal *T* perpendiculaire à l'axe de pale *B* entre un bord d'attaque 6 et un bord de fuite 7. La pale 1 comporte une partie profilée 4 située entre le début de pale 2 et le bout de pale 9. La partie profilée 4 est constituée par une succession de profils aérodynamiques 15 situés dans un plan transversal sensiblement perpendiculaire à l'axe de pale *B,* chaque profil délimitant une section de la pale 1. La pale 1 comporte également un dièdre 5 à l'extrémité libre de cette pale 1, c'est-à-dire au niveau du bout de pale 9.

La pale 1 est destinée à former un rotor 11 d'aéronef 10 à voilure tournante comme représenté sur la figure 3. Ce rotor 11 comporte un moyeu 12 et cinq pales 1 destinées à être en rotation autour d'un axe de rotation *A* du moyeu 12. Chaque pale 1 est reliée au moyeu 12 au niveau du début de pale 2.

Le rotor 11 est caractérisé par le rayon rotor *R*, c'est-à-dire la distance entre l'axe de rotation *A* et le bout de pale 9 selon l'axe de pale *B*. La corde *c* des profils 15 des sections de la pale 1 correspond à la distance maximale entre le bord d'attaque 6 et le bord de fuite 7 de cette pale 1 dans un plan transversal sensiblement perpendiculaire à l'axe de pale *B*. Une corde moyenne $\bar{c}$ est définie en tant que valeur moyenne de la corde *c* sur la partie profilée 4. Le début de pale 2 est situé à une sixième distance égale à 0.1*R* de l'axe de rotation *A* et le début 3 de la partie profilée 4 de la pale 1 est situé à une septième distance égale à 0.2*R* de l'axe de rotation *A*.

La pale 1 selon l'invention présente une combinaison des lois de variation de la flèche, des cordes et du vrillage afin d'une part de réduire le bruit émis par chaque pale 1 du rotor 11 lors d'un vol d'approche et d'autre part d'améliorer les performances aérodynamiques de chaque pale 1 aussi bien lors d'un vol stationnaire que d'un vol d'avancement de l'aéronef 10.

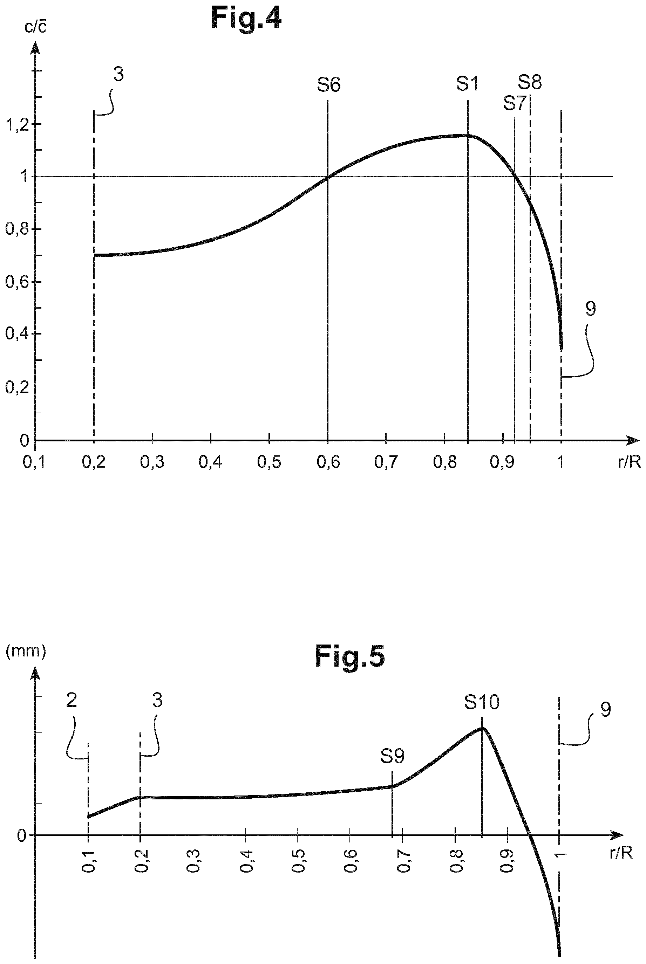

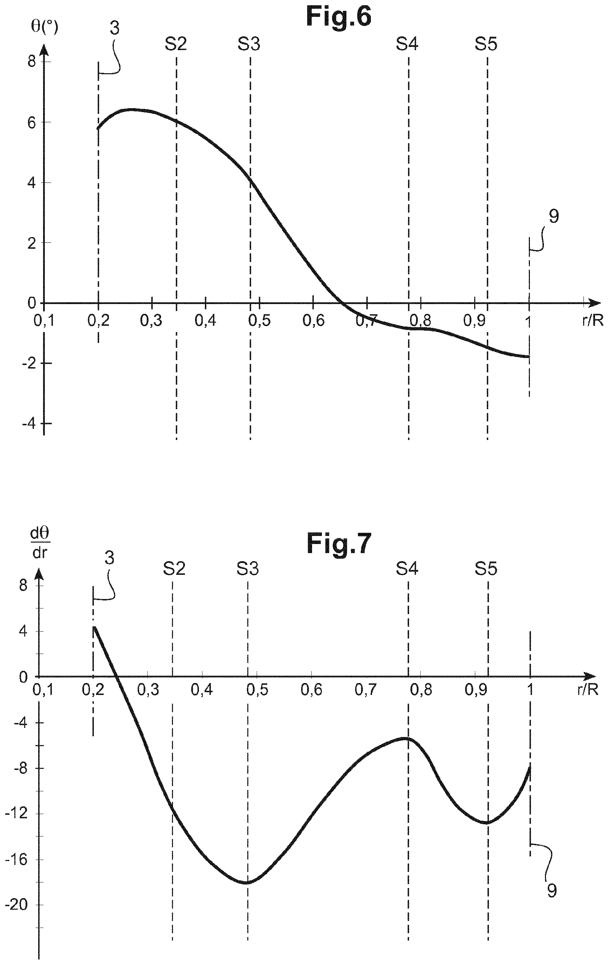

Les lois de variation des cordes, de la flèche et du vrillage des profils 15 des sections de la pale 1 sont représentées respectivement sur les figures 4 à 6. La figure 7 représente le gradient de vrillage de la pale 1 qui est la dérivée locale du vrillage le long de l'envergure de la pale 1 du rotor 11 de rayon rotor *R*.

La loi de variation des cordes des profils 15 des sections de la pale 1 représentée sur la figure 4 comporte en abscisse le rapport de la position des profils 15 des sections de la pale 1 selon l'envergure de cette pale 1 par le rayon rotor *R* et en ordonnée le rapport de la corde *c* des profils 15 des sections de la pale 1 par la corde moyenne $\bar{c}$.

La corde moyenne $\bar{c}$ est définie par une pondération en carré du rayon r de chaque profil 15 des sections

$$\bar{c} = \frac{\int_{R_0}^{R} L(r).r^2.dr}{\int_{R_0}^{R} r^2.dr},$$

de la pale 1 selon la formule *L(r)* étant la longueur de la corde locale d'un profil de la pale 1 située à un rayon r de l'axe de rotation *A, R₀* étant le rayon du début 3 de la partie profilée 4 et *R* le rayon du bout de pale 9.

Selon cette loi de variation des cordes, la corde *c* des profils 15 des sections de la pale 1 augmente entre le début 3 de la partie profilée 4 et une première section *S1* située à une première distance de l'axe de rotation *A* égale à 0.85*R*. Au-delà de la première section *S1*, la corde diminue jusqu'au bout de pale 9. On constate que la corde *c* est inférieure à la corde moyenne $\bar{c}$ entre le début de la partie profilée de la pale 1 et une sixième section *S6* située à une huitième distance de l'axe de rotation *A* égale à 0.6*R*. De plus, la corde *c* varie entre le début 3 de la partie profilée 4 et la première section *S1* de 0.8$\bar{c}$

à 1.2$\bar{c}$ ce qui représente une variation de +/-20% autour de la corde moyenne $\bar{c}$. La corde en bout de pale est égale à 0.3$\bar{c}$.

Ensuite, la corde des profils 15 des sections de la pale 1 est supérieure à cette corde moyenne $\bar{c}$ entre cette sixième section *S6* et une septième section *S7* située à une neuvième distance de l'axe de rotation *A* comprise entre 0.85*R* et 0.95*R*. Enfin, la corde des profils 15 des sections de la pale 1 est inférieure à cette corde moyenne $\bar{c}$ au-delà de cette septième section *S7* et jusqu'au bout de pale 9.

En outre, la corde *c* diminue selon une courbe sensiblement parabolique au delà d'une huitième section *S8* située à une dixième distance égale 0.95*R*. L'extrémité de la pale 1 forme ainsi un saumon parabolique 8.

La loi de vrillage de la pale 1 représentée sur la figure 6 est une loi non linéaire correspondant à une courbe polynomiale. Le rapport de la position des profils 15 des sections de la pale 1 selon l'envergure par le rayon rotor *R* se trouve en abscisse et l'angle de vrillage *θ* de ces profils 15 des sections de la pale 1 se trouve en ordonnée.

Le gradient de vrillage est représenté sur la figure 7 et comporte en abscisse le rapport de la position des profils 15 des sections de la pale 1 selon l'envergure de la pale 1 par le rayon rotor *R* et en ordonnée la dérivée locale du vrillage du profil 15.

Tout d'abord, l'angle de vrillage *θ* varie faiblement entre le début 3 de la partie profilée 4 et une deuxième section *S2* située à une deuxième distance de l'axe de rotation A égale à 0.35*R*. La variation de l'angle de vrillage *θ* est inférieure à 2° entre le début 3 de la partie profilée 4 et la deuxième section *S2*. L'angle de vrillage *θ* augmente légèrement puis diminue selon l'envergure, le gradient de vrillage étant positif au niveau du début 3 de la partie profilée 4 et décroissant pour être négatif au niveau de la deuxième section *S2*.

L'angle de vrillage *θ* décroit ensuite entre la deuxième section *S2* et une troisième section S3 située à une troisième distance de l'axe de rotation *A* égale à 0.48*R*, le gradient du vrillage décroissant jusqu'à un premier palier égal à -18°/*R* au niveau de la troisième section *S3*.

L'angle de vrillage *θ* décroit ensuite moins entre la troisième section *S3* et une quatrième section *S4* située à une quatrième distance de l'axe de rotation *A* égale à 0.78*R*, le gradient du vrillage augmentant jusqu'à un deuxième palier égal à -6°/*R* au niveau de la quatrième section *S4*. L'angle de vrillage *θ* est notamment égal à 0° pour un profil 15 de la pale 1 situé à une distance de l'axe de rotation *A* égale à 0.7*R*.

L'angle de vrillage *θ* décroit de nouveau davantage entre la quatrième section *S4* et une cinquième section *S5* située à une cinquième distance de l'axe de rotation *A* égale à 0.92*R*, le gradient du vrillage décroissant jusqu'à un troisième palier égal à -13°/*R* au niveau de la cinquième section *S5*.

Enfin, l'angle de vrillage *θ* décroit moins entre la cinquième section *S5* et le bout de pale 9, le gradient du vrillage augmentant jusqu'à un gradient de vrillage égal -8°/*R* au niveau du bout de pale 9.

Cette loi de vrillage combinée à la loi de variation des cordes des profils 15 des sections de la pale 1 permet d'améliorer les performances aérodynamiques de la pale 1 aussi bien lors d'un vol stationnaire qu'en vol d'avancement.

La loi de variation de la flèche de la pale 1 selon la figure 5 définit une triple flèche. Le rapport de la position des profils 15 des sections de la pale 1 selon l'axe de pale *B* par le rayon rotor *R* se trouve en abscisse et l'angle de flèche α de ces profils 15 se trouve en ordonnée.

Ainsi, la flèche est tout d'abord dirigée vers l'avant de la pale 1 entre le début 3 de la partie profilée 4 et une neuvième section *S9* située à une onzième distance de l'axe de rotation *A* égale à 0.67*R*, le bord d'attaque 6 formant un premier angle de flèche avant α₁ égal à 4° avec l'axe de pale *B*. Ensuite, la flèche est dirigée vers l'avant de la pale 1 entre la neuvième section *S9* et une dixième section *S10* située à une douzième distance de l'axe de rotation *A* égale à 0.85*R*, le bord d'attaque 6 formant un deuxième angle de flèche avant α₂ égal à 8° avec l'axe de pale B. Enfin, la flèche est dirigée vers l'arrière de la pale 1 entre la dixième section *S10* et le bout de pale 9, le bord d'attaque 6 formant un troisième angle de flèche arrière α₃ égal à -23° avec l'axe de pale *B*.

Les raccordements entre les premier, deuxième et troisième angles de flèche sont réalisés de préférence par un rayon de raccordement afin d'éviter d'avoir des angles vifs au niveau de chacun de ces raccordements. Ces rayons de raccordement sont par exemple de l'ordre de 500mm.

Par ailleurs, la pale 1 comporte le dièdre 5 à son extrémité libre orienté vers le bas. Ce dièdre 5 commence au niveau de la huitième section *S8* et se terminant au bout de pale 9. Ce dièdre 5 permet principalement d'améliorer les performances aérodynamiques de la pale 1 en vol stationnaire en réduisant l'influence du tourbillon généré par la pale précédente.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention, qui est limitée par les revendications.

**Revendications**

1. Pale (1) pour rotor (11) d'aéronef (10) à voilure tournante destinée à être en rotation autour d'un axe de rotation (A), ladite pale (1) s'étendant d'une part selon un axe de pale (B) entre un début de pale (2) apte à être relié à un moyeu (12) dudit rotor (11) et un bout de pale (9) situé à une extrémité libre de ladite pale (1) et d'autre part selon un axe transversal (T) perpendiculaire audit axe de pale (B) entre un bord d'attaque (6) et un bord de fuite (7), ladite pale (1) comportant une partie profilée (4) située entre ledit début de pale (2) et ledit bout de pale (9), ladite partie profilée (4) étant constituée par une succession de profils aérodynamiques (15), chaque profil aérodynamique (15) étant situé dans un plan transversal sensiblement perpendiculaire audit axe de pale (B) et délimitant une section de ladite pale (1), ledit bout de pale (9) étant situé à une distance égale à un rayon rotor R dudit axe de rotation (A), une distance maximale entre ledit bord d'attaque (6) et ledit bord de fuite (7) dans ledit plan transversal constituant une corde *c* pour ledit profil aérodynamique (15) desdites sections de ladite pale (1), une corde moyenne $\bar{c}$ étant une valeur moyenne de ladite corde *c* sur ladite partie profilée (4), un premier sens vers l'avant étant défini dudit bord de fuite (7) vers ledit bord d'attaque (6) et un second sens vers l'arrière étant défini dudit bord d'attaque (6) vers ledit bord de fuite (7),

   ladite pale (1) présentant une combinaison des lois de variation des cordes et du vrillage, ledit vrillage étant formé par les variations angulaires entre lesdits profils aérodynamiques (15) de ladite pale (1), ladite corde augmentant entre le début (3) de ladite partie profilée (4) et une première section (S1) située à une première distance dudit axe de rotation (A) comprise entre 0.6*R* et 0.9*R*, ladite corde diminuant au-delà de ladite première section (S1), et ledit vrillage décroissant entre une deuxième section (S2) située à une deuxième distance dudit axe de rotation (A) comprise entre 0.3*R* et 0.4*R* et ledit bout de pale (9), un premier gradient dudit vrillage étant compris entre -25°/*R* et -4°/*R* entre ladite deuxième section (S2) et une troisième section (S3) située à une troisième distance dudit axe de rotation (A) comprise entre 0.4*R* et 0.6*R*, un deuxième gradient dudit vrillage étant compris entre -25°/*R* et -4°/*R* entre ladite troisième section (S3) et une quatrième section (S4) située à une quatrième distance dudit axe de rotation (A) comprise entre 0.65*R* et 0.85*R*, un troisième gradient dudit vrillage étant compris entre -16°/*R* et -4°/*R* entre ladite quatrième section (S4) et une cinquième section (S5) située à une cinquième distance dudit axe de rotation (A) comprise entre 0.85*R* et 0.95*R*, un quatrième gradient dudit vrillage étant compris entre -16°/*R* et 0°/*R* entre ladite cinquième section (S5) et ledit bout de pale (9), lesdites lois de variation des cordes et du vrillage étant combinées avec une loi de variation de la flèche, ladite flèche, qui est l'angle entre ledit bord d'attaque et ledit axe de pale (B), étant dirigée vers l'avant de ladite pale (1) entre ledit début (3) de ladite partie profilée (4) et une neuvième section (S9) située à une onzième distance dudit axe de rotation (A) comprise entre 0.5*R* et 0.8*R*, ledit bord d'attaque formant un premier angle de flèche avant ($\alpha_1$) strictement supérieur à 0° et inférieur à 10° avec ledit axe de pale (B), ladite flèche étant dirigée vers l'avant de ladite pale (1) entre ladite neuvième section (S9) et une dixième section (S10) située à une douzième distance dudit axe de rotation (A) comprise entre 0.6$R$ et 0.95$R$, ledit bord d'attaque formant un deuxième angle de flèche avant ($\alpha_2$) compris entre 1° et 15° avec ledit axe de pale (B), ledit premier angle de flèche avant ($\alpha_1$) étant différent dudit deuxième angle de flèche avant ($\alpha_2$), ladite flèche étant dirigée vers l'arrière de ladite pale (1) entre ladite dixième section (S10) et ledit bout de pale (9), ledit bord d'attaque formant un troisième angle de flèche arrière ($\alpha_3$) compris entre -35° et -15° avec ledit axe de pale (B), **caractérisée en ce que** ledit vrillage évolue de façon linéaire par morceaux entre deux sections adjacentes parmi lesdites deuxième, troisième, quatrième et cinquième sections (S2,S3,S4,S5) et entre ladite cinquième section (S5) et ledit bout de pale (9), ledit premier gradient dudit vrillage étant inférieur audit deuxième gradient dudit vrillage, ledit deuxième gradient dudit vrillage étant supérieur audit troisième gradient dudit vrillage, ledit troisième gradient dudit vrillage étant inférieur audit quatrième gradient dudit vrillage.

2. Pale (1) pour rotor (11) d'aéronef (10) à voilure tournante destinée à être en rotation autour d'un axe de rotation (A), ladite pale (1) s'étendant d'une part selon un axe de pale (B) entre un début de pale (2) apte à être relié à un moyeu (12) dudit rotor (11) et un bout de pale (9) situé à une extrémité libre de ladite pale (1) et d'autre part selon un axe transversal (T) perpendiculaire audit axe de pale (B) entre un bord d'attaque (6) et un bord de fuite (7), ladite pale (1) comportant une partie profilée (4) située entre ledit début de pale (2) et ledit bout de pale (9), ladite partie profilée (4) étant constituée par une succession de profils aérodynamiques (15), chaque profil aérodynamique (15) étant situé dans un plan transversal sensiblement perpendiculaire audit axe de pale (B) et délimitant une section de ladite pale (1), ledit bout de pale (9) étant situé à une distance égale à un rayon rotor R dudit axe de rotation (A), une distance maximale entre ledit bord d'attaque (6) et ledit bord de fuite (7) dans ledit plan transversal constituant une corde $c$ pour ledit profil aérodynamique (15) desdites sections de ladite pale (1), une corde moyenne $\bar{c}$ étant une valeur moyenne de ladite corde $c$ sur ladite partie profilée (4), un premier sens vers l'avant étant défini dudit bord de fuite (7) vers ledit bord d'attaque (6) et un second sens vers l'arrière étant défini dudit bord d'attaque (6) vers ledit bord de fuite (7),

ladite pale (1) présentant une combinaison des lois de variation des cordes et du vrillage, ledit vrillage étant formé par les variations angulaires entre lesdits profils aérodynamiques (15) de ladite pale (1), ladite corde augmentant entre le début (3) de ladite partie profilée (4) et une première section (S1) située à une première distance dudit axe de rotation (A) comprise entre 0.6$R$ et 0.9$R$, ladite corde diminuant au-delà de ladite première section (S1), et ledit vrillage décroissant entre une deuxième section (S2) située à une deuxième distance dudit axe de rotation (A) comprise entre 0.3$R$ et 0.4$R$ et ledit bout de pale (9), un premier gradient dudit vrillage étant compris entre -25°/$R$ et -4°/$R$ entre ladite deuxième section (S2) et une troisième section (S3) située à une troisième distance dudit axe de rotation (A) comprise entre 0.4$R$ et 0.6$R$, un deuxième gradient dudit vrillage étant compris entre -25°/$R$ et -4°/$R$ entre ladite troisième section (S3) et une quatrième section (S4) située à une quatrième distance dudit axe de rotation (A) comprise entre 0.65$R$ et 0.85$R$, un troisième gradient dudit vrillage étant compris entre -16°/$R$ et -4°/$R$ entre ladite quatrième section (S4) et une cinquième section (S5) située à une cinquième distance dudit axe de rotation (A) comprise entre 0.85$R$ et 0.95$R$, un quatrième gradient dudit vrillage étant compris entre -16°/$R$ et 0°/$R$ entre ladite cinquième section (S5) et ledit bout de pale (9), lesdites lois de variation des cordes et du vrillage étant combinées avec une loi de variation de la flèche, ladite flèche, qui est l'angle entre ledit bord d'attaque et ledit axe de pale (B), étant dirigée vers l'avant de ladite pale (1) entre ledit début (3) de ladite partie profilée (4) et une neuvième section (S9) située à une onzième distance dudit axe de rotation (A) comprise entre 0.5$R$ et 0.8$R$, ledit bord d'attaque formant un premier angle de flèche avant ($\alpha_1$) strictement supérieur à 0° et inférieur à 10° avec ledit axe de pale (B), ladite flèche étant dirigée vers l'avant de ladite pale (1) entre ladite neuvième section (S9) et une dixième section (S10) située à une douzième distance dudit axe de rotation (A) comprise entre 0.6$R$ et 0.95$R$, ledit bord d'attaque formant un deuxième angle de flèche avant ($\alpha_2$) compris entre 1° et 15° avec ledit axe de pale (B), ledit premier angle de flèche avant ($\alpha_1$) étant différent dudit deuxième angle de flèche avant ($\alpha_2$), ladite flèche étant dirigée vers l'arrière de ladite pale (1) entre ladite dixième section (S10) et ledit bout de pale (9), ledit bord d'attaque formant un troisième angle de flèche arrière ($\alpha_3$) compris entre -35° et -15° avec ledit axe de pale (B), **caractérisée en ce que** ledit vrillage évolue de façon non linéaire sur ladite partie profilée (4), ledit premier gradient dudit vrillage atteignant un premier palier compris entre -25°/$R$ et -15°/$R$ au niveau de ladite troisième section (S3), ledit deuxième gradient dudit vrillage atteignant un deuxième palier compris entre -14°/$R$ et -4°/$R$ au niveau de ladite quatrième section (S4), ledit troisième gradient dudit vrillage atteignant un troisième palier compris entre -16°/$R$ et -6°/$R$ au niveau de ladite cinquième section (S5), ledit quatrième gradient dudit vrillage étant compris entre -10°/*R* et 0°/*R* au niveau dudit bout de pale (9).

**3.** Pale (1) selon la revendication 2,
**caractérisée en ce que** ledit premier palier est égal à -18°/*R*, ledit deuxième palier à -6°/*R*, ledit troisième palier à -13°/*R* et ledit quatrième gradient dudit vrillage est égal à -8°/*R* au niveau dudit bout de pale (9).

**4.** Pale (1) selon l'une quelconque des revendications 1 à 3,
**caractérisée en ce que** la variation dudit vrillage est inférieure ou égale à 2° entre ledit début (3) de ladite partie profilée (4) et ladite deuxième section (S2).

**5.** Pale (1) selon l'une quelconque des revendications 1 à 4,
**caractérisée en ce que** ladite deuxième distance est égale à 0.35*R*, ladite troisième distance à 0.48*R*, ladite quatrième distance à 0.78*R* et ladite cinquième distance à 0.92R.

**6.** Pale (1) selon l'une quelconque des revendications 1 à 5,
**caractérisée en ce que** ledit début de pale (2) est situé à une sixième distance comprise entre 0.05R et 0.3R dudit axe de rotation (A) et ledit début (3) de ladite partie profilée (4) est situé à une septième distance comprise entre 0.1*R* et 0.4*R* dudit axe de rotation (A), ladite septième distance étant supérieure ou égale à ladite sixième distance, ladite corde au niveau dudit début (3) de ladite partie profilée (4) de ladite pale (1) étant comprise entre $0.4\overline{c}$ et $0.9\overline{c}$.

**7.** Pale (1) selon l'une quelconque des revendications 1 à 6,
**caractérisée en ce que** ladite corde varie autour de ladite corde moyenne $\overline{c}$ de +/-40% entre ledit début (3) de ladite partie profilée (4) et ladite première section (S1).

**8.** Pale (1) selon l'une quelconque des revendications 1 à 7,
**caractérisée en ce que** ladite corde diminue de façon non linéaire au delà d'une huitième section (S8) située à une dixième distance dudit axe de rotation (A) comprise entre 0.9*R* et 0.95*R* jusqu'audit bout de pale (9).

**9.** Pale (1) selon la revendication 8,
**caractérisée en ce que** ladite corde diminue de façon parabolique au delà de ladite huitième section (S8).

**10.** Pale (1) selon l'une quelconque des revendications 1 à 9, **caractérisée en ce que** ladite pale (1) comporte un dièdre au niveau dudit bout de pale (9).

**11.** Pale (1) selon l'une quelconque des revendications 1 à 10,
**caractérisée en ce que** ledit premier angle de flèche avant ($\alpha_1$) est strictement inférieur audit deuxième angle de flèche avant ($\alpha_2$).

**12.** Pale (1) selon l'une quelconque des revendications 1 à 11,
**caractérisée en ce que** ledit premier angle de flèche avant ($\alpha_1$), ledit deuxième angle de flèche avant ($\alpha_2$) et ledit troisième angle de flèche arrière ($\alpha_3$) sont constants respectivement entre ledit début (3) de ladite partie profilée (4) et ladite neuvième section (S9), entre ladite neuvième section (S9) et ladite dixième section (S10) et entre ladite dixième section (S10) et ledit bout de pale (9).

**13.** Pale (1) selon l'une quelconque des revendications 1 à 12,
**caractérisée en ce que** ledit premier angle de flèche avant ($\alpha_1$) est égal à 4°, ledit deuxième angle de flèche avant ($\alpha_2$) à 8° et ledit troisième angle de flèche arrière ($\alpha_3$) à -23°.

**14.** Pale (1) selon l'une quelconque des revendications 1 à 13,
**caractérisée en ce que** ladite corde moyenne $\overline{c}$ est définie par une pondération en carré du rayon *r* de chaque profil (15) desdites sections de ladite pale

$$\overline{c} = \frac{\int_{R_0}^{R} L(r).r^2.dr}{\int_{R_0}^{R} r^2.dr},$$

(1) selon la formule *L(r)* étant la longueur de ladite corde locale d'un profil (15) de ladite pale (1), ledit profil (15) local étant situé à un rayon r de l'axe de rotation (A), $R_0$ étant le rayon dudit début (3) de ladite partie profilée (4) et *R* le rayon dudit bout de pale (9).

**15.** Rotor (11) destiné à un aéronef (10) à voilure tournante comportant au moins deux pales (1) selon l'une quelconque des revendications 1 à 14.

**Patentansprüche**

**1.** Rotorblatt (1) für einen Rotor (11) eines Luftfahrzeugs (10) mit Drehflügeln, das dazu bestimmt ist, sich um eine Rotationsachse (A) zu drehen, wobei das Rotorblatt (1) sich einerseits entlang einer Rotorblattachse (B) zwischen einer Rotorblattwurzel (2), die mit einer Nabe (12) des Rotors (11) verbunden werden kann, und einer Rotorblattspitze (9) erstreckt, die an einem freien Ende des Rotorblatts (1) angeordnet ist, und sich andererseits entlang einer Querachse (T), die senkrecht zu der Rotorblattachse (B) verläuft, zwischen einer Vorderkante (6) und einer Hinterkante (7) erstreckt, wobei das Rotorblatt (1) einen profilierten Abschnitt (4) aufweist, der zwischen der Rotorblattwurzel (2) und der Rotorblattspitze (9) liegt, wobei der profilierte Abschnitt (4) aus einer Aufeinanderfolge aerodynamischer Profile (15) besteht, wobei jedes aerodynamische Profil (15) in einer Querebene liegt, die im Wesentlichen senkrecht zu der Rotorblattachse (B) verläuft und einen Abschnitt des Rotorblatts (1) begrenzt, wobei die Rotorblattspitze (9) in einem Abstand liegt, der gleich einem Rotorradius R der Rotationsachse (A) ist, wobei ein maximaler Abstand zwischen der Vorderkante (6) und der Hinterkante (7) in der Querebene eine Sehne $c$ für das aerodynamische Profil (15) der Abschnitte des Rotorblatts (1) bildet, wobei eine mittlere Sehnenlänge $\bar{c}$ ein Mittelwert der Sehne $c$ in dem profilierten Abschnitt (4) ist, wobei eine erste Vorwärtsrichtung von der Hinterkante (7) zu der Vorderkante (6) definiert ist und eine zweite Rückwärtsrichtung von der Vorderkante (6) zu der Hinterkante (7) definiert ist, wobei das Rotorblatt (1) eine Kombination von Änderungsgesetzen der Sehnenlänge und Verwindungsgesetzen aufweist, wobei die Verwindung gebildet wird durch Winkeländerungen zwischen den aerodynamischen Profilen (15) des Rotorblatts (1), wobei die Sehnenlänge zwischen dem Anfang (3) des profilierten Abschnitts (4) und einem ersten Abschnitt (S1), der in einem ersten Abstand von der Rotationsachse (A) liegt, der zwischen 0,6R und 0,9R beträgt, zunimmt, wobei die Sehnenlänge jenseits des ersten Abschnitts (S1) abnimmt, und die Verwindung zwischen einem zweiten Abschnitt (S2), der in einem zweiten Abstand von der Rotationsachse (A), der zwischen 0,3R und 0,4R beträgt, und der Rotorblattspitze (9) liegt, wobei ein erster Gradient der Verwindung zwischen dem zweiten Abschnitt (S2) und einem dritten Abschnitt (S3) zwischen -25°/R und -4°/R beträgt, der in einem dritten Abstand von der Rotationsachse A liegt, der zwischen 0,4R und 0,6R beträgt, wobei ein zweiter Gradient der Verwindung zwischen -25°/R und -4°/R zwischen dem dritten Abschnitt (S3) und einem vierten Abschnitt (S4) beträgt, der in einem vierten Abstand von der Rotationsachse (A) liegt, der zwischen 0,65R und 0,85R beträgt, wobei ein dritter Gradient der Verwindung zwischen -16°/R und -4°/R zwischen dem vierten Abschnitt (S4) und einem fünften Abschnitt (S5) beträgt, der in einem fünften Abstand von der Rotationsachse (A) liegt, der zwischen 0,85 R und 0,95 R beträgt, wobei ein vierter Gradient der Verwindung zwischen -16°/R und 0°/R zwischen dem fünften Abschnitt (S5) und der Rotorblattspitze (9) beträgt, wobei die Änderungsgesetze der Sehnenlänge und die Verwindungsgesetze kombiniert werden mit einem Änderungsgesetz der Durchbiegung, wobei die Durchbiegung, die der Winkel zwischen der Vorderkante und der Rotorblattachse (B) ist, zum vorderen Teil des Rotorblatts (1) zwischen dem Anfang (3) des profilierten Abschnitts (4) und einem neunten Abschnitt (S9) gerichtet ist, der in einem elften Abstand von der Rotationsachse (A) liegt, der zwischen 0,5R und 0,8R beträgt, wobei die Vorderkante einen ersten vorderen Durchbiegungswinkel ($\alpha$1) mit der Rotorblattachse (B) bildet, der immer größer als 0° und kleiner als 10° ist, wobei die Durchbiegung zum vorderen Teil des Rotorblatts (1) zwischen dem neunten Abschnitt (S9) und einem zehnten Abschnitt (S10) gerichtet ist, der in einem zwölften Abstand von der Rotationsachse (A) liegt, der zwischen 0,6R und 0,95R beträgt, wobei die Vorderkante einen zweiten vorderen Durchbiegungswinkel ($\alpha$2) bezüglich der Rotorblattachse (B) zwischen 1° und 15° bildet, wobei der erste vordere Durchbiegungswinkel ($\alpha$1) und der zweite vordere Durchbiegungswinkel ($\alpha$2) verschieden sind, wobei die Durchbiegung zwischen dem zehnten Abschnitt (S10) und der Rotorblattspitze (9) auf den hinteren Teil des Rotorblatts (1) gerichtet ist, wobei die Vorderkante einen dritten hinteren Durchbiegungswinkel ($\alpha$3) bezüglich der Rotorblattachse (B) bildet, der zwischen -35° und -15° beträgt, **dadurch gekennzeichnet, dass** die Verwindung sich pro Stück linear entwickelt zwischen zwei benachbarten Abschnitten unter den zweiten, dritten, vierten und fünften Abschnitten (S2, S3, S4, S5) und zwischen dem fünften Abschnitt (S5) und der Rotorblattspitze (9), wobei der erste Gradient der Verwindung kleiner ist als der zweite Gradient der Verwindung, der zweite Gradient der Verwindung größer ist als der dritte Gradient der Verwindung, wobei der dritte Gradient der Verwindung kleiner als der vierte Gradient der Verwindung ist.

2. Rotorblatt (1) für einen Rotor (11) eines Luftfahrzeugs (10) mit Drehflügeln, das dazu bestimmt ist, sich um eine Rotationsachse (A) zu drehen, wobei das Rotorblatt (1) sich einerseits entlang einer Rotorblattachse (B) zwischen einer Rotorblattwurzel (2), die mit einer Nabe (12) des Rotors (11) verbunden werden kann, und einer Rotorblattspitze (9) erstreckt, die an einem freien Ende des Rotorblatts (1) angeordnet ist, und sich andererseits entlang einer Querachse (T), die senkrecht zu der Rotorblattachse (B) verläuft, zwischen einer Vorderkante (6) und einer Hinterkante (7) erstreckt, wobei das Rotorblatt (1) einen profilierten Abschnitt (4) aufweist, der zwischen der Rotorblattwurzel (2) und der Rotorblattspitze (9) liegt, wobei der profilierte Abschnitt (4) aus einer Aufeinanderfolge aerodynamischer Profile (15) besteht, wobei jedes aerodynamische Profil (15) in einer Querebene liegt, die im Wesentlichen senkrecht zu der Rotorblattachse (B) verläuft und einen Abschnitt des Rotorblatts (1) begrenzt, wobei die Rotorblattspitze (9) in einem Abstand liegt, der gleich einem Rotorradius R der Rotationsachse (A) ist, wobei ein maximaler Abstand zwischen der Vorderkante (6) und der Hinterkante (7) in der Querebene eine Sehne $c$ für das aerodynamische Profil (15) der Abschnitte des Rotorblatts (1) bildet, wobei eine mittlere Sehnenlänge $\bar{c}$ ein Mittelwert der Sehne $c$ in dem profilierten Abschnitt (4) ist, wobei eine erste Vorwärtsrichtung von der Hinterkante (7) zu der Vorderkante (6) definiert ist und eine zweite Rückwärtsrichtung von der Vorderkante (6) zu der Hinterkante (7) definiert ist, wobei das Rotorblatt (1) eine Kombination von Änderungsgesetzen der Sehnenlänge und Verwindungsgesetzen aufweist, wobei die Verwindung gebildet wird durch Winkeländerungen zwischen den aerodynamischen Profilen (15) des Rotorblatts (1), wobei die Sehnenlänge zwischen dem Anfang (3) des profilierten Abschnitts (4) und einem ersten Abschnitt (S1), der in einem ersten Abstand von der Rotationsachse (A) liegt, der zwischen 0,6R und 0,9R beträgt, zunimmt, wobei die Sehnenlänge jenseits des ersten Abschnitts (S1) abnimmt, und die Verwindung zwischen einem zweiten Abschnitt (S2), der in einem zweiten Abstand von der Rotationsachse (A), der zwischen 0,3R und 0,4R beträgt, und der Rotorblattspitze (9) liegt, wobei ein erster Gradient der Verwindung zwischen dem zweiten Abschnitt (S2) und einem dritten Abschnitt (S3) zwischen -25°/R und -4°/R beträgt, der in einem dritten Abstand von der Rotationsachse (A) liegt, der zwischen 0,4R und 0,6R beträgt, wobei ein zweiter Gradient der Verwindung zwischen -25°/R und -4°/R zwischen dem dritten Abschnitt (S3) und einem vierten Abschnitt (S4) beträgt, der in einem vierten Abstand von der Rotationsachse (A) liegt, der zwischen 0,65R und 0,85R beträgt, wobei ein dritter Gradient der Verwindung zwischen -16°/R und -4°/R zwischen dem vierten Abschnitt (S4) und einem fünften Abschnitt (S5) beträgt, der in einem fünften Abstand von der Rotationsachse (A) liegt, der zwischen 0,85 R und 0,95 R beträgt, wobei ein vierter Gradient der Verwindung zwischen -16°/R und 0°/R zwischen dem fünften Abschnitt (S5) und der Rotorblattspitze (9) beträgt, wobei die Änderungsgesetze der Sehnenlänge und die Verwindungsgesetze kombiniert werden mit einem Änderungsgesetz der Durchbiegung, wobei die Durchbiegung, die der Winkel zwischen der Vorderkante und der Rotorblattachse (B) ist, zum vorderen Teil des Rotorblatts (1) zwischen dem Anfang (3) des profilierten Abschnitts (4) und einem neunten Abschnitt (S9) gerichtet ist, der in einem elften Abstand von der Rotationsachse (A) liegt, der zwischen 0,5R und 0,8R beträgt, wobei die Vorderkante einen ersten vorderen Durchbiegungswinkel ($\alpha$1) mit der Rotorblattachse (B) bildet, der immer größer als 0° und kleiner als 10° ist, wobei die Durchbiegung zum vorderen Teil des Rotorblatts (1) zwischen dem neunten Abschnitt (S9) und einem zehnten Abschnitt (S10) gerichtet ist, der in einem zwölften Abstand von der Rotationsachse (A) liegt, der zwischen 0,6R und 0,95R beträgt, wobei die Vorderkante einen zweiten vorderen Durchbiegungswinkel ($\alpha$2) mit der Rotorblattachse (B) zwischen 1° und 15° bildet, wobei der erste vordere Durchbiegungswinkel ($\alpha$1) und der zweite vordere Durchbiegungswinkel ($\alpha$2) verschieden sind, wobei die Durchbiegung zwischen dem zehnten Abschnitt (S10) und der Rotorblattspitze (9) auf den hinteren Teil des Rotorblatts (1) gerichtet ist, wobei die Vorderkante einen dritten hinteren Durchbiegungswinkel ($\alpha$3) bezüglich der Rotorblattachse (B) bildet, der zwischen -35° und -15° beträgt,
**dadurch gekennzeichnet, dass** die Verwindung sich auf nicht-lineare Weise über den profilierten Abschnitt (4) entwickelt, wobei der erste Gradient der Verwindung eine erste Stufe schen -25°/R und -15°/R auf der Höhe des dritten Abschnitts (S3) erreicht, der zweite Gradient der Verwindung eine zweite Stufe zwischen -14°/R und -4°/R auf der Höhe des vierten Abschnitts (S4) erreicht, der dritte Gradient der Verwindung eine dritte Stufe zwischen -16°/R und -6°/R auf der Höhe des fünften Abschnitts (S5) erreicht, der vierte Gradient der Verwindung zwischen -10°/R und 0°/R auf der Höhe der Rotorblattspitze (9) beträgt.

3. Rotorblatt (1) nach Anspruch 2,
   **dadurch gekennzeichnet, dass** die erste Stufe gleich -18°/R ist, die zweite Stufe gleich -6°/R, die dritte Stufe gleich -13°/R und der vierte Gradient der Verwindung gleich -8°/R auf der Höhe der Rotorblattspitze (9) ist.

4. Rotorblatt (1) nach einem der Ansprüche 1 bis 3,
   **dadurch gekennzeichnet, dass** die Änderung der Verwindung kleiner oder gleich 2° zwischen dem Anfang (3) des profilierten Abschnitts (4) und dem zweiten Abschnitt (S2) ist.

5. Rotorblatt nach einem der Ansprüche 1 bis 4,
   **dadurch gekennzeichnet, dass** der zweite Abstand 0,35R, der dritte Abstand 0,48R, der vierte Abstand 0,78R und der fünfte Abstand 0,92R beträgt.

6. Rotorblatt nach einem der Ansprüche 1 bis 5,
   **dadurch gekennzeichnet, dass** die Rotorblattwurzel (2) in einem sechsten Abstand von der Rotationsachse (A) liegt, der zwischen 0,05R und 0,3R beträgt, und der Anfang (3) des profilierten Abschnitts (4) in einem siebten Abstand von der Rotationsachse (A) liegt, der zwischen 0,1R und 0,4R beträgt, wobei der siebte Abstand größer oder gleich dem sechsten Abstand ist, wobei die Sehnenlänge auf der Höhe des Anfangs (3) des profilierten Abschnitts (4) des Rotorblatts (1) zwischen 0,4 $\bar{c}$ und 0,9 $\bar{c}$ beträgt.

7. Rotorblatt nach einem der Ansprüche 1 bis 6,
   **dadurch gekennzeichnet, dass** die Sehnenlänge um die mittlere Sehnenlänge $\bar{c}$ mit +/- 40% zwischen dem Anfang (3) des profilierten Abschnitts (4) und dem ersten Abschnitt (S1) variiert.

8. Rotorblatt (1) nach einem der Ansprüche 1 bis 7, **dadurch gekennzeichnet, dass** die Sehnenlänge über einen achten Abschnitt (S8) hinaus auf nichtlineare Weise abnimmt, wobei der achte Abschnitt in einem zehnten Abstand von der Rotationsachse (A) liegt, der zwischen 0,9R und 0,95R beträgt, bis zu Rotorblattspitze (9).

9. Rotorblatt (1) nach Anspruch 8, **dadurch gekennzeichnet, dass** die Sehnenlänge über den achten Abschnitt (S8) hinaus parabolisch abnimmt.

10. Rotorblatt (1) nach einem der Ansprüche 1 bis 9, **dadurch gekennzeichnet, dass** das Rotorblatt (1) auf der Höhe der Rotorblattspitze (9) eine Verschneidung aufweist.

11. Rotorblatt (1) nach einem der Ansprüche 1 bis 10, **dadurch gekennzeichnet, dass** der erste vordere Durchbiegungswinkel ($\alpha$1) immer kleiner als der zweite vordere Durchbiegungswinkel ($\alpha$2) ist.

12. Rotorblatt (1) nach einem der Ansprüche 1 bis 11, **dadurch gekennzeichnet, dass** der erste vordere Durchbiegungswinkel ($\alpha$1), der zweite vordere Durchbiegungswinkel ($\alpha$2) und der dritte hintere Durchbiegungswinkel ($\alpha$3) jeweils zwischen dem Anfang (3) des profilierten Abschnitts (4) und dem neunten Abschnitt (S9), zwischen dem neunten Abschnitt (S9) und dem zehnten Abschnitt (S10) und zwischen dem zehnten Abschnitt (S10) und der Rotorblattspitze (9) jeweils konstant sind.

13. Rotorblatt (1) nach einem der Ansprüche 1 bis 12, **dadurch gekennzeichnet, dass** der erste vordere Durchbiegungswinkel ($\alpha$1) gleich 4° ist, der zweite vordere Durchbiegungswinkel ($\alpha$2) gleich 8° ist und der dritte hintere Durchbiegungswinkel ($\alpha$3) gleich -23° beträgt.

14. Rotorblatt (1) nach einem der Ansprüche 1 bis 13, **dadurch gekennzeichnet, dass** die mittlere Sehnenlänge $\bar{c}$ definiert ist durch eine Quadratwichtung des Radius r eines jeden Profils (15) der Abschnitte des Rotorblatts (1) gemäß der Formel $\bar{c} =$

$$\frac{\int_{R_0}^{R} L(r) . r^2 . dr}{\int_{R_0}^{R} r^2 . dr} ,$$

wobei L(r) die Länge der örtlichen Sehne eines Profils (15) des Rotorblatts (1) ist, wobei das örtliche Profil (15) A an einem Radius r der Rotationsachse (A) liegt, wobei $R_0$ der Radius des Anfangs (3) des profilierten Abschnitts (4) ist und R der Radius der Rotorblattspitze (9) ist.

15. Rotor (11) für ein Luftfahrzeug (10) mit Drehflügeln mit mindestens zwei Rotorblättern (1) nach einem der Ansprüche 1 bis 14.

**Claims**

1. Blade (1) for a rotor (11) of a rotary wing aircraft (10), which blade is intended to rotate about an axis of rotation (A), said blade (1) extending along a blade axis (B) between a blade root (2) which is connectable to a hub (12) of said rotor (11) and a blade tip (9) located at a free end of said blade (1) and said blade extending along a transverse axis (T), which is perpendicular to said blade axis (B), between a leading edge (6) and a trailing edge (7), said blade (1) comprising a profiled portion (4) located between said blade root (2) and said blade tip (9), said profiled portion (4) being made up of a series of aerodynamic profiles (15), each aerodynamic profile (15) being located in a transverse plane, which is substantially perpendicular to said blade axis (B), and delimiting a cross-sectional area of said blade (1), said blade tip (9) being located at a distance equal to a rotor radius *R* of said axis of rotation (A), a maximum distance between said leading edge (6) and said trailing edge (7) in said transverse plane constituting a chord *c* for said aerodynamic profile (15) of said cross-sectional areas of said blade (1), an average chord $\bar{c}$ being an average value of said chord *c* over said profiled portion (4), a first forward direction being defined from said trailing edge (7) to said leading edge (6) and a second backward direction being defined from said leading edge (6) to said trailing edge (7), said blade (1) having a combination of laws of variation of the chords and of the twist, said twist being formed by the angular variations between said aerodynamic profiles (15) of said blade (1), said chord increasing between the start (3) of said profiled portion (4) and a first cross-sectional area (S1) located at a first distance from said axis of rotation (A) of between 0.6R and 0.9R, said chord decreasing beyond said first cross-sectional area (S1), and said twist decreasing between a second cross-sectional area (S2) located at a second distance from said axis of rotation (A) of between 0.3*R* and 0.4*R* and said blade tip (9), a first slope of said twist being between -25°/*R* and -4°/*R* between said second cross-sectional area (S2) and a third cross-sectional area (S3) located at a third distance from said axis of rotation (A) of between 0.4R and 0.6R, a second slope of said twist being between -25°/*R* and -4°/*R* between said third cross-sectional area (S3) and a fourth cross-sectional area (S4) located at a fourth distance from said axis of rotation (A) of between 0.65R and 0.85R, a third slope of said twist being between -16°/*R* and -4°/*R* between said fourth cross-sectional area (S4) and a fifth cross-sectional area (S5) located at a fifth distance from said axis of rotation (A) of between 0.85R and 0.95R, a fourth slope of said twist being between -16°/R and 0°/R between said fifth cross-sectional area (S5) and said blade tip (9), said laws of variation of the chords and of the twist being combined with a law of variation of the sweepback, said sweepback, which is the angle between said leading edge and said blade axis (B), being directed towards the front of said blade (1) between said start (3) of said profiled portion (4) and a ninth cross-sectional area (S9) located at an eleventh distance from said axis of rotation (A) of between 0.5R and 0.8R, said leading edge forming a first front sweepback angle ($\alpha_1$) with said blade axis (B) that is strictly greater than 0° and less than 10°, said sweepback being directed towards the front of said blade (1) between said ninth cross-sectional area (S9) and a tenth cross-sectional area (S10) located at a twelfth distance from said axis of rotation (A) of between 0.6R and 0.95R, said leading edge forming a second front sweepback angle ($\alpha_2$) with said blade axis (B) of between 1° and 15°, said first front sweepback angle ($\alpha_1$) being different from said second front sweepback angle ($\alpha_2$), said sweepback being directed towards the back of said blade (1) between said tenth cross-sectional area (S10) and said blade tip (9), said leading edge forming a third backward sweepback angle ($\alpha_3$) with said blade axis (B) of between -35° and -15°, **characterized in that** said twist varies piecewise linearly between two adjacent cross-sectional areas from said second, third, fourth and fifth cross-sectional areas (S2, S3, S4, S5) and between said fifth cross-sectional area (S5) and said blade tip (9), said first slope of said twist being less than said second slope of said twist, said second slope of said twist being greater than said third slope of said twist, said third slope of said twist being less than said fourth slope of said twist.

2. Blade (1) for a rotor (11) of a rotary wing aircraft (10), which blade is intended to rotate about an axis of rotation (A), said blade (1) extending along a blade axis (B) between a blade root (2) which is connectable to a hub (12) of said rotor (11) and a blade tip (9) located at a free end of said blade (1) and said blade extending along a transverse axis (T), which is perpendicular to said blade axis (B), between a leading edge (6) and a trailing edge (7), said blade (1) comprising a profiled portion (4) located between said blade root (2) and said blade tip (9), said profiled portion (4) being made up of a series of aerodynamic profiles (15), each aerodynamic profile (15) being located in a transverse plane, which is substantially perpendicular to said blade axis (B), and delimiting a cross-sectional area of said blade (1), said blade tip (9) being located at a distance equal to a rotor radius R of said axis of rotation (A), a maximum distance between said leading edge (6) and said trailing edge (7) in said transverse plane constituting a chord $c$ for said aerodynamic profile (15) of said cross-sectional areas of said blade (1), an average chord $\overline{c}$ being an average value of said chord $c$ over said profiled portion (4), a first forward direction being defined from said trailing edge (7) to said leading edge (6) and a second backward direction being defined from said leading edge (6) to said trailing edge (7), said blade (1) having a combination of laws of variation of the chords and of the twist, said twist being formed by the angular variations between said aerodynamic profiles (15) of said blade (1), said chord increasing between the start (3) of said profiled portion (4) and a first cross-sectional area (S1) located at a first distance from said axis of rotation (A) of between 0.6R and 0.9R, said chord decreasing beyond said first cross-sectional area (S1), and said twist decreasing between a second cross-sectional area (S2) located at a second distance from said axis of rotation (A) of between 0.3R and 0.4R and said blade tip (9), a first slope of said twist being between -25°/R and -4°/R between said second cross-sectional area (S2) and a third cross-sectional area (S3) located at a third distance from said axis of rotation (A) of between 0.4R and 0.6R, a second slope of said twist being between -25°/R and -4°/R between said third cross-sectional area (S3) and a fourth cross-sectional area (S4) located at a fourth distance from said axis of rotation (A) of between 0.65R and 0.85R, a third slope of said twist being between -16°/R and -4°/R between said fourth cross-sectional area (S4) and a fifth cross-sectional area (S5) located at a fifth distance from said axis of rotation (A) of between 0.85R and 0.95R, a fourth slope of said twist being between -16°/R and 0°/R between said fifth cross-sectional area (S5) and said blade tip (9), said laws of variation of the chords and of the twist being combined with a law of variation of the sweepback, said sweepback, which is the angle between said leading edge and said blade axis (B), being directed towards the front of said blade (1) between said start (3) of said profiled portion (4) and a ninth cross-sectional area (S9) located at an eleventh distance from said axis of rotation (A) of between 0.5R and 0.8R, said leading edge forming a first front sweepback angle ($\alpha_1$) with said blade axis (B) that is strictly greater than 0° and less than 10°, said sweepback being directed towards the front of said blade (1) between said ninth cross-sectional area (S9) and a tenth cross-sectional area (S10) located at a twelfth distance from said axis of rotation (A) of between 0.6R and 0.95R, said leading edge forming a second front sweepback angle ($\alpha_2$) with said blade axis (B) of between 1° and 15°, said first front sweepback angle ($\alpha_1$) being different from said second front sweepback angle ($\alpha_2$), said sweepback being direct-

ed towards the back of said blade (1) between said tenth cross-sectional area (S10) and said blade tip (9), said leading edge forming a third backward sweepback angle ($\alpha_3$) with said blade axis (B) of between -35° and -15°, **characterized in that** said twist varies non-linearly over said profiled portion (4), said first slope of said twist reaching a first plateau of between -25°/$R$ and -15°/$R$ in the region of said third cross-sectional area (S3), said second slope of said twist reaching a second plateau of between -14°/$R$ and - 4°/$R$ in the region of said fourth cross-sectional area (S4), said third slope of said twist reaching a third plateau of between -16°/$R$ and -6°/$R$ in the region of said fifth cross-sectional area (S5), said fourth slope of said twist being between -10°/$R$ and 0°/$R$ in the region of said blade tip (9).

3. Blade (1) according to claim 2, **characterized in that** said first plateau is equal to - 18°/$R$, said second plateau is equal to -6°/$R$, said third plateau is equal to -13°/$R$ and said fourth slope of said twist is equal to -8°/$R$ in the region of said blade tip (9).

4. Blade (1) according to any of claims 1 to 3, **characterized in that** the variation of said twist is less than or equal to 2° between said start (3) of said profiled portion (4) and said second cross-sectional area (S2).

5. Blade (1) according to any of claims 1 to 4, **characterized in that** said second distance is equal to 0.35$R$, said third distance is equal to 0.48$R$, said fourth distance is equal to 0.78R and said fifth distance is equal to 0.92$R$.

6. Blade (1) according to any of claims 1 to 5, **characterized in that** said blade root (2) is located at a sixth distance from said axis of rotation (A) of between 0.05$R$ and 0.3$R$ and said start (3) of said profiled portion (4) is located at a seventh distance from said axis of rotation (A) of between 0.1$R$ and 0.4$R$, said seventh distance being greater than or equal to said sixth distance, said chord in the region of said start (3) of said profiled portion (4) of said blade (1) being between 0.4$\bar{c}$ and 0.9$\bar{c}$.

7. Blade (1) according to any of claims 1 to 6, **characterized in that** said chord varies around said average chord $\bar{c}$ by +/- 40% between said start (3) of said profiled portion (4) and said first cross-sectional area (S1).

8. Blade (1) according to any of claims 1 to 7, **characterized in that** said chord decreases non-linearly beyond an eighth cross-sectional area (S8), located at a tenth distance from said axis of rotation (A) of between 0.9$R$ and 0.95$R$, as far as said blade tip (9).

9. Blade (1) according to claim 8, **characterized in that** said chord decreases parabolically beyond said eighth cross-sectional area (S8).

10. Blade (1) according to any of claims 1 to 9, **characterized in that** said blade (1) comprises a dihedral in the region of said blade tip (9).

11. Blade (1) according to any of claims 1 to 10, **characterized in that** said first front sweepback angle ($\alpha_1$) is strictly less than said second front sweepback angle ($\alpha_2$).

12. Blade (1) according to any of claims 1 to 11, **characterized in that** said first front sweepback angle ($\alpha_1$), said second front sweepback angle ($\alpha_2$) and said third backward sweepback angle ($\alpha_3$) are constant between said start (3) of said profiled portion (4) and said ninth cross-sectional area (S9), between said ninth cross-sectional area (S9) and said tenth cross-sectional area (S10) and between said tenth cross-sectional area (S10) and said blade tip (9), respectively.

13. Blade (1) according to any of claims 1 to 12, **characterized in that** said first front sweepback angle ($\alpha_1$) is equal to 4°, said second front sweepback angle ($\alpha_2$) is equal to 8° and said third backward sweepback angle ($\alpha_3$) is equal to -23°.

14. Blade (1) according to any of claims 1 to 13, **characterized in that** said average chord $\bar{c}$ is defined by a weighting of the square of the radius $r$ of each profile (15) of said cross-sectional areas of said blade (1) according to the formula

$$\bar{c} = \frac{\int_{R_0}^{R} L(r).r^2.dr}{\int_{R_0}^{R} r^2.dr}, \ L(r)$$

, $L(r)$ being the length of said local chord of a profile (15) of said blade (1), said local profile (15) being located at a radius $r$ of the axis of rotation (A), $R_0$ being the radius of said start (3) of said profiled portion (4) and $R$ being the radius of said blade tip (9).

15. Rotor (11) for a rotary wing aircraft (10) comprising at least two blades (1) according to any of claims 1 to 14.

**Fig.1**

**Fig.2**

**Fig.3**

# Fig.4

# Fig.5

Fig.6

Fig.7

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0842846 A
- US 7252479 B
- EP 0565413 A
- EP 1557354 A
- US 20120251326 A
- US 6116857 A

**Littérature non-brevet citée dans la description**

- Multiobjective-Multipoint Rotor Blade Optimization in Forward Flight Conditions Using Surrogate-Assisted Memetic Algorithms. *European Rotorcraft Forum,* Septembre 2011